# EUROPÄISCHE PATENTANMELDUNG

(11) **EP 4 843 646 A1**
(43) Veröffentlichungstag der Anmeldung: **25.11.2026**
(21) Anmeldenummer: 25178566.3
(22) Anmeldetag: 23.05.2025
(51) Int. Cl.: B01D 3/00

(54) **WÄRMEINTEGRATIONSNETZWERK FÜR CHEMISCHE PRODUKTIONSSTANDORTE**

(71) Anmelder: Evonik Oxeno GmbH & Co. KG, 45772 Marl (DE)
(72) Erfinder: PAUL, Niklas, 45770 Marl (DE); RIX, Armin Matthias, 45770 Marl (DE); SCHRÖDER, Moritz, 48153 Münster (DE); WESSNER, Lea, 44139 Dortmund (DE); ZAMPONI, Guido, 64823 Gross-Umstadt (DE); SCHALLENBERG, Jörg, 46286 Dorsten (DE); DAHL, Hans-Detlef, 45768 Marl (DE)
(74) Vertreter: Evonik Patent Association

(57) **Zusammenfassung**

Gegenstand der Erfindung ist ein Verfahren zur energetischen Optimierung eines chemischen Produktionsstandorts mithilfe eines Wärmeintegrationsnetzwerks. Das Verfahren umfasst das Einsammeln von Wärmeenergie in drei unterschiedlichen Produktionsanlagen durch das Übertragen von Energie auf einen Wärmeträger A und einen Wärmeträger B. Mit beiden Wärmeträgern A und B wird dann ein Heizmedium erzeugt, das innerhalb des Produktionsstandorts eingesetzt wird.

## Beschreibung

Die vorliegende Erfindung betrifft ein Verfahren zur energetischen Optimierung eines chemischen Produktionsstandorts mithilfe eines Wärmeintegrationsnetzwerks. Das Verfahren umfasst das Einsammeln von Wärmeenergie in drei unterschiedlichen Produktionsanlagen durch das Übertragen von Energie auf einen Wärmeträger A und einen Wärmeträger B. Mit beiden Wärmeträgern A und B wird dann ein Heizmedium erzeugt, das innerhalb des Produktionsstandorts eingesetzt wird.

Die chemische Industrie ist einer der Industriezweige mit dem höchsten Energiebedarf. Große Mengen an Energie werden für die Herstellung der chemischen Erzeugnisse und insbesondere für die Aufreinigung der hergestellten chemischen Erzeugnisse, beispielsweise die Aufreinigung mittels Destillation. In Zeiten hoher Energiepreise ist der Betrieb von chemischen Produktionsanlagen bzw. gesamten Produktionsstandorten somit wirtschaftlich besonders aufwendig. Darüber hinaus wird die für die Herstellung von chemischen Erzeugnissen notwendige Energie häufig durch Heizdampf oder ein anderes Heizmedium bereitgestellt, bei dessen Erzeugung signifikante Mengen an CO₂ entstehen.

In den letzten Jahren wurden viele Elektrifizierungsmaßnahmen innerhalb einer Produktionsanlage erarbeitet, um Energie einzusparen und CO₂-Emissionen zu verringern. Mögliche Maßnahmen zur Einsparung von Energie und/oder die Reduzierung von CO₂-Emissionen in einer Produktionsanlage sind die Brüdenverdichtung bei der Destillation oder der Einsatz von Wärmepumpen. Entsprechende Maßnahmen zur Elektrifizierung von chemischen Prozessen haben den Nachteil, dass sie oft mit recht hohen Investitionskosten (CAPEX) und einem großen Platzbedarf verbunden sind. So ist es insbesondere in bestehenden Anlagen herausfordernd den Platz für einen zusätzlichen Verdichter, zusätzliche Wärmeträger, ein zusätzliches Schalthaus, zusätzliche Infrastruktur oder ähnliches bereitzustellen. Ferner ist es für Produktionsanlagen mit vergleichsweise geringem Energiebedarf fast unmöglich ein wirtschaftliches Szenario für kostenintensive Apparate zu erarbeiten.

Die Aufgabe der vorliegenden Erfindung war deshalb die Bereitstellung eines Verfahrens, welches die vorher genannten Nachteile nicht aufweist. Es sollte insbesondere ein Verfahren erschlossen werden, bei dem die Investitionskosten und der Platzbedarf insgesamt geringer sind. Gleichzeitig sollte es möglich sein auch Produktionsanlagen mit vergleichsweise geringem Energiebedarf einzubeziehen.

Diese Aufgabe wird durch das erfindungsgemäße Verfahren nach Anspruch 1 gelöst. Bevorzugte Ausführungsformen sind in den Unteransprüchen angegeben.

Das erfindungsgemäße Verfahren ist ein Verfahren zur energetischen Optimierung eines chemischen Produktionsstandorts mithilfe mindestens eines Wärmeintegrationsnetzwerks,
wobei der chemische Produktionsstandort mindestens drei unterschiedliche Produktionsanlagen und das mindestens eine Wärmeintegrationsnetzwerk die Wärmeträger WA1 und WA2 in je einer der vorhandenen Produktionsanlagen, in denen Wärmeenergie auf einen Wärmeträger A übertragen wird, mindestens einen weiteren Wärmeträger WB1 in einer der vorhandenen Produktionsanlagen, in dem Wärmeenergie auf einen Wärmeträger B übertragen wird, und mindestens einen Verdichter umfasst;
wobei die auf den Wärmeträger übertragene Wärmeenergie an einer Stelle innerhalb einer Produktionsanlage anfällt und mithilfe eines Wärmeträgers abgenommen wird;
wobei das Verfahren zumindest die nachfolgenden Schritte umfasst:
   a) der Wärmeträger A durch die Energieübertragung zumindest in den Wärmeträgern WA1 und WA2 unter Erhalt des Wärmeträgers A1 erhitzt und zumindest teilweise verdampft; der Wärmeträger A1 danach im Verdichter mehrstufig verdichtet und anschließend als Heizmedium innerhalb mindestens einer Produktionsanlage im Produktionsstandort eingesetzt wird; und
   b) der Wärmeträger B durch Energieübertragung zumindest in dem Wärmeträger WB1 unter Erhalt des Wärmeträgers B1 erhitzt und zumindest teilweise verdampft; der Wärmeträger B1 danach im Verdichter mehrstufig verdichtet und anschließend als Heizmedium innerhalb mindestens einer Produktionsanlage im Produktionsstandort eingesetzt wird.

Das erfindungsgemäße Verfahren hat den Vorteil, dass die Wärmeintegration, also die Nutzung von Abwärmen durch Aufwertung (Verdichtung), durch den Einsatz von zumindest den beiden Wärmeträgern A und B innerhalb eines Produktionsstandorts genutzt werden kann. Der Platzbedarf und die Investitionskosten werden im Vergleich zu Lösungen, wo nur einzelne Produktionsanlagen wärmeintegriert werden, verringert. Zudem können auch Produktionsanlagen innerhalb des Wärmeintegrationsnetzwerks berücksichtigt werden, bei denen sich eine intrinsische Wärmeintegration wegen eines geringen Energiebedarfs nicht lohnt.

Der Begriff chemischer Produktionsstandort meint im Rahmen der vorliegenden Erfindung einen Produktionsstandort, an dem chemische und/oder pharmazeutische und/oder biotechnologische Erzeugnisse oder Stoffe in entsprechenden Produktionsanlagen her- oder bereitgestellt werden. Beispiele für Produktionsstandorte in Deutschland sind Chemieparks wie der Chemiepark Marl, der Chempark Leverkusen oder der Produktionsstandort in Ludwigshafen oder allgemeiner Industrieparks wie der Industriepark Hoechst. International sind die Häfen von Antwerpen, Rotterdam und Le Havre, der Nanjing Chemical Industrial Park (NCIP) oder der Shanghai Chemical Industry Park (SCIP) bekannte Beispiele für große Produktionsstandorte.

Der Begriff Produktionsanlage oder chemische Produktionsanlage meint im Rahmen der vorliegenden Erfindung physische Einrichtungen, Komponenten oder ein System von Anlagen, die zur Herstellung oder Bereitstellung chemischer, pharmazeutischer oder biotechnologischer Produkte bzw. chemischer Stoffe eingesetzt werden. Der Begriff Produktionsanlage betrifft sowohl Anlagen, in denen Produkte bzw. Stoffe durch chemische Reaktion hergestellt werden, beispielsweise Anlagen zur Oligomerisierung, zur Polymerisierung, zur Hydroformylierung oder zur Hydrierung, als auch Anlagen, in denen chemische Stoffe durch Abtrennung bereitgestellt werden, beispielsweise die Extraktivdestillation von Butadien oder die destillative Abtrennung von 1-Buten. In einer Produktionsanlage wird im Rahmen der vorliegenden Erfindung immer mindestens ein Produkt oder ein Stoff erhalten, der entweder verkauft oder weiterverarbeitet werden kann.

Wenn auch keine chemische Produktionsanlage könnten Rechenzentren, die bekanntermaßen ebenfalls große Mengen an Abwärme erzeugen mit in das erfindungsgemäße Verfahren einbezogen werden. Die Abwärme des Rechenzentrums könnte ebenfalls mit einem Wärmeträger eingesammelt werden.

Der Begriff Wärmeintegrationsnetzwerk bezieht sich auf ein Netzwerk aus Wärmetauschern und mindestens eines Verdichters innerhalb eines chemischen Produktionsstandorts, bei dem Energie in Form von Wärmeenergie an verschiedenen Stellen, den Wärmequellen, des Produktionsstandorts über Wärmeträger eingesammelt, mittels mindestens einem Verdichter aufgewertet und an einer oder mehreren Stellen innerhalb des gleichen oder eines anderen Produktionsstandorts zur Beheizung bzw. Erwärmung eingesetzt wird. Möglich wäre auch ein teilweiser Einsatz als Fernwärme. Ein Wärmeintegrationsnetzwerk zeichnet sich weiterhin dadurch aus, dass mehrere Wärmequellen und Wärmesenken miteinander verschaltet werden, auch über mehrere verschiedene Wärmeträger.

Der chemische Produktionsstandort, in dem definitionsgemäß chemische und/oder pharmazeutische und/oder biotechnologische Erzeugnisse oder Stoffe produziert werden, weist erfindungsgemäß mindestens zwei unterschiedliche Produktionsanlagen auf. In einer bevorzugten Ausführungsform weist der chemische Produktionsstandort mindestens drei unterschiedliche Produktionsanlagen, besonders bevorzugt mindestens vier unterschiedliche Produktionsanlagen auf.

Es ist erfindungsgemäß mindestens ein Wärmeintegrationsnetzwerk vorhanden. Je nach Größe des chemischen Produktionsstandorts und der Möglichkeit unterschiedliche Abwärmen bzw. Abwärmemengen einzusammeln, kann es von Vorteil sein, wenn der chemische Produktionsstandort mehr als ein Wärmeintegrationsnetzwerk aufweist.

Das Wärmeintegrationsnetzwerk umfasst in jeder der vorhandenen Produktionsanlagen mindestens einen Wärmeträger. In den Wärmeträgern wird Energie in Form von Wärme dadurch eingesammelt, dass die Wärmeenergie auf einen der Wärmeträger übertragen wird. Einzelne Produktionsanlagen können auch mehr als einen Wärmeträger umfassen, an denen Abwärmen abgenommen und auf einen der Wärmeträger A und B oder auf einen anderen Wärmeträger übertragen werden können, beispielsweise wenn weitere Wärmeintegrationsnetzwerke vorhanden sind.

Als die innerhalb des Wärmeintegrationsnetzwerks eingesetzten Wärmeträger können dem Fachmann bekannten Wärmeträger, beispielsweise Verdampfern, eingesetzt werden. Geeignete Verdampfer zum Beispiel Naturumlaufverdampfer, Zwangsumlaufverdampfer, Zwangsumlaufverdampfer mit Entspannung, Kesselverdampfer, Fallfilmverdampfer oder Dünnschichtverdampfer. Als Wärmeträger für den Verdampfer wird bei Naturumlaufverdampfern und Zwangsumlaufverdampfern üblicherweise ein Rohrbündel oder Plattenapparat eingesetzt. Neben den genannten kann aber auch jede beliebige andere, dem Fachmann bekannte Verdampferbauart, die sich zum Einsatz an einer Destillationskolonne eignet, eingesetzt werden. In allen genannten Typen können die strukturierten Wärmeträgerrohre eingesetzt werden.

Im Rahmen der vorliegenden Erfindung können auch Verdampfer eingesetzt werden, die strukturierte Wärmeträgerrohre mit mindestens einem strukturierten Bereich umfassen.

Strukturierte Wärmeträgerrohre im Rahmen der vorliegenden Erfindung sind als Rohre zu verstehen, die mindestens einen strukturierten Bereich umfassen. Ein strukturierter Bereich zeichnet sich dabei durch ein wiederkehrendes Muster aus. Beispiele dafür sind Rippen bzw. Kanäle. Entsprechende Rohre sind dem Fachmann beispielsweise aus der EP 1 312 885 A2, der EP 1 830 151 A1, der WO 2017/207091 A1 oder der WO 2022/106045 A1 bekannt.

Die strukturierten Wärmeträgerrohre weisen vorzugsweise mehr als einen, also mehrere strukturierte Bereiche auf. Sofern mehrere strukturierte Bereiche vorliegen, ist es bevorzugt, dass die strukturierten Wärmeträgerrohre die strukturierten Bereiche auf der Rohrinnen- und/oder Rohraußenseite aufweisen. Bevorzugt ist sowohl auf der Rohrinnen- als auch der Rohraußenseite mindestens ein strukturierter Bereich vorhanden. In einer besonders bevorzugten Ausführungsform der vorliegenden Erfindung umfassen die strukturierten Bereiche kontinuierlich oder diskontinuierlich verlaufende achsparallele oder helixförmig umlaufende Rippen. Möglich sind auch Oberflächenstrukturen, die als re-entrant surfaces bezeichnet werden. Beispiele für solche Wärmeträgerrohre mit re-entrant surfaces werden von der Firma Wieland unter dem Produktnamen GEWA-B vertrieben.

Die strukturierten Wärmeträgerrohre haben den Vorteil, dass der Wärmeübergang zwischen den Medien im Wärmeträger verbessert wird. Der verbesserte Wärmeübergang sorgt zum einen dafür, dass man eine niedrige Temperaturdifferenz realisieren kann und zum anderen, dass dadurch die strukturierten Rohre im Vergleich zu Standardrohren kleiner ausgeführt werden. Der Einsatz strukturierter Wärmeträgerrohre hat dadurch auch den Vorteil, dass weitere Verdichterleistung und damit elektrische Energie (Stromkosten) eingespart werden kann. Die strukturierten Bereiche bewirken einen verbesserten Wärmeaustausch zwischen den Medien in den Sumpfverdampfern.

Das Wärmeintegrationsnetzwerk umfasst weiterhin mindestens einen Verdichter, mit dem der oder die Wärmeträger teilweise oder vollständig verdichtet werden. Der verdichtete Wärmeträger weist einen höheren Druck auf als der Wärmeträger vor der Verdichtung. Durch das Verdichten kann sich durch den Zusammenhang von Druck und Temperatur aus auch die Temperatur des Wärmeträgers erhöhen.

Das Verdichten des oder der Wärmeträger kann auf jede beliebige, dem Fachmann bekannte Art erfolgen. So kann die Verdichtung zum Beispiel mechanisch und einstufig oder mehrstufig durchgeführt werden. Einstufig bedeutet in diesem Zusammenhang, dass eine Verdichtung von einem auf ein anderes Druckniveau stattfindet. Mehrstufig bedeutet, dass erst auf ein erstes Druckniveau und dann vom ersten Druckniveau auf ein zweites Druckniveau verdichtet wird. Bei einer mehrstufigen Verdichtung können mehrere Verdichter gleicher Bauart oder Verdichter unterschiedlicher Bauart eingesetzt werden. Eine mehrstufige Verdichtung kann mit einer oder mehreren Verdichtermaschinen erfolgen. Der Einsatz einer einstufigen Verdichtung oder einer mehrstufigen Verdichtung ist vom Verdichtungsverhältnis und somit davon abhängig, auf welchen Druck der oder die Wärmeträger verdichtet werden soll.

Als Verdichter im erfindungsgemäßen Verfahren, insbesondere zum Verdichten des oder der Wärmeträger, eignet sich jeder beliebige, dem Fachmann bekannte Verdichter, bevorzugt mechanische Verdichter, mit dem sich Gasströme verdichten lassen. Geeignete Verdichter sind zum Beispiel ein- oder mehrstufige Getriebeturboverdichter, Kolbenverdichter, Schraubenverdichter, Zentrifugalverdichter oder Axialverdichter.

Im Rahmen der vorliegenden Erfindung weist der chemische Produktionsstandort mindestens drei unterschiedliche Produktionsanlagen auf. Jede erfindungsgemäße Produktionsanlage umfasst mindestens einen Wärmeträger, von dem Energie auf einen der Wärmeträger übertragen wird. Eine erfindungsgemäße Produktionsanlage umfasst vorzugsweise mindestens eine Destillationskolonne oder mindestens einen Reaktor umfasst. Dort wird an geeigneten Wärmeträgern die Energie abgenommen.

Die auf einen der Wärmeträger übertragene Wärmeenergie ist Abwärme aus den vorhandenen Produktionsanlagen. Die auf einen der Wärmeträger übertragene Wärmeenergie ist Wärmeenergie, die an einer Stelle innerhalb einer Produktionsanlage anfällt und mithilfe eines Wärmeträgers abgenommen wird, insbesondere durch Kühlen einer Wärmquelle. Beispiele dafür sind die Reaktionswärme, die während bei einer exothermen Reaktion anfällt, Adsorptionswärme, die während einer Adsorption anfällt, Absorptionswärme, die während einer Absorption anfällt, Kristallisationswärme, die während einer Kristallisation anfällt, oder Kondensationswärme ist, die bei der zumindest teilweisen Kondensation, beispielsweise eines Brüden bei einer Destillation, anfällt, oder wobei die durch die auf den Wärmeträger übertragene Wärmeenergie, die beim Kühlen von gasförmigen oder flüssigen Stoffströmen innerhalb einer Produktionsanlage anfällt. Weiterhin kann auch bei der Mischung oder der Dissoziation Energie frei werden, die als Abwärme eingesammelt werden kann.

Die Reaktionswärme von exothermen Reaktionen kann über dem Fachmann bekannte Techniken abgenommen werden, beispielsweise durch das Kühlen des Reaktors und/oder durch das Kühlen, des Reaktionsprodukts. Gleiches gilt auch für die Adsorption oder die Absorption, wo die Wärmeenergie durch Kühlen der Anlage oder durch Kühlen des erhaltenen Stroms abgenommen werden kann. Die Kondensationswärme wird durch das Kühlen von zumindest teilweise in gasförmiger Form vorliegenden Strömen abgenommen. Die wichtigsten Beispiele sind die Kondensation des Brüden bei der Destillation und die Kondensation von Produktströmen aus einer chemischen Reaktion.

Jede Produktionsanlage kann unabhängig voneinander aus einer 1-Buten-Abtrennung, einer Butadienabtrennung, einer Oligomerisierung inklusive Produktaufreinigung, einer Hydroformylierung oder Alkoxycarbonylierung inklusive Produktaufreinigung, einer Hydrierung von Aldehyden zu Alkoholen inklusive Produktaufreinigung, einer Kernhydrierung von Benzolpolycarbonsäureestern, einer MTBE-Synthese inklusive Produktaufreinigung, einer MTBE-Spaltung inklusive Produktaufreinigung oder einer Selektivhydrierung von Dienen oder Acetylenen ausgewählt werden.

Eine 1-Buten-Abtrennung betrifft die Abtrennung von 1-Buten aus C4-Kohlenwasserstoffströmen. Die Abtrennung kann in einer Destillationseinheit, die mindestens zwei Destillationskolonnen umfasst, erfolgen. In der ersten Destillationskolonne werden Isobutan und 1-Buten am Kopf anfallen und zur zweiten Destillationskolonne geleitet. In der zweiten Destillationskolonne werden dann Isobutan und 1-Buten voneinander getrennt. Ein solches Verfahren wird beispielsweise in der DE 10 2005 062 700 A1 offenbart. Wärmeenergie, die bei einer 1-Buten-Abtrennugn eingesammelt werden kann, ist vor allem die Kondensationswärme, die bei der Kondensation der Brüden in den Destillationskolonnen anfällt.

Eine Butadienabtrennung betrifft die Abtrennung von Butadien aus C4-Kohlenwasserstoffströmen. Diese Abtrennung erfolgt häufig extraktiv, d. h. unter Verwendung eines Extraktionsmittels wie N-Methyl-2-Pyrrolidon (NMP). Wärmeenergie, die bei einer Butadien-Abtrennung eingesammelt werden kann, ist Absorptionswärme, die bei der exothermen Absorption von Butadien in das Extraktionsmittel anfällt, und/oder Kondensationswärme, die bei der Kondensation der Brüden in den Destillationskolonnen anfällt.

Eine Oligomerisierung ist eine Reaktion, mit der kürzerkettige Olefine zu längerkettigen Molekülen umgesetzt werden. Ein Beispiel ist die Umsetzung von C3- oder C4-Olefinen zu C6- oder C8-Olefinen. Die Oligomerisierung kann grundsätzlich homogen oder heterogen katalysiert werden. Ein Beispiel einer heterogen katalysierten Oligomerisierung findet sich in EP 3 782 970 A1. Wärmeenergie, die bei einer Oligomerisierung eingesammelt werden kann, ist Reaktionswärme, die bei der exothermen Oligomerisierung anfällt, und/oder Kondensationswärme, die in der Produktaufreinigung bei der Kondensation der Brüden in der oder den Destillationskolonnen anfällt.

Eine Hydroformylierung ist eine Reaktion, bei der Olefine mit Synthesegas zu Aldehyden umgesetzt werden. Eine Variante davon ist die Alkoxycarbonylierung, bei der Olefine mit Kohlenmonoxid und Alkoholen zu Estern umgesetzt werden. Beide Reaktionstypen werden üblicherweise homogen katalysiert durchgeführt. In der Hydroformylierung gibt es Bestrebungen zu Heterogenisierung des Katalysatorsystems auf geeigneten Trägermaterialien wie SiC. Wärmeenergie, die bei einer Hydroformylierung oder Alkoxycarbonylierung eingesammelt werden kann, ist Reaktionswärme, die bei der exothermen Hydroformylierung oder Alkoxycarbonylierung anfällt, und/oder Kondensationswärme, die in der Produktaufreinigung bei der Kondensation der Brüden in der oder den Destillationskolonnen anfällt.

Eine Hydrierung ist die Anlagerung von Wasserstoff. Beispiele sind die Hydrierung von beispielsweise bei der Hydroformylierung hergestellten Aldehyden zu Alkoholen, die Kernhydrierung von Benzolpolycarbonsäureestern zu entsprechenden Cyclohexanpolycarbonsäureestern und die Selektivhydrierung von Dienen oder Acetylenen in Kohlenwasserstoffströmen, die Olefine enthalten. Wärmeenergie, die bei einer Hydrierung eingesammelt werden kann, ist Reaktionswärme, die bei der exothermen Hydrierung anfällt, und/oder Kondensationswärme, die in der Produktaufreinigung bei der Kondensation der Brüden in der oder den Destillationskolonnen anfällt.

Eine MTBE-Synthese betrifft eine Reaktion, bei der Isobuten mit Methanol zu Methyl-tert.-butyl-ether (MTBE) umgesetzt wird. Das ist eine wichtige Reaktion um Isobuten aus C4-Kohlenwasserstoffströmen zu entfernen. Die entgegengesetzte Reaktion ist die MTBE-Spaltung, bei der MTBE in Isobuten und Methanol gespalten wird. Dadurch kann hochreines Isobuten erzeugt werden. Wärmeenergie, die bei einer MTBE-Synthese oder der MTBE-Spaltung eingesammelt werden kann, ist Reaktionswärme, die bei der MTBE-Synthese anfällt, und/oder Kondensationswärme, die in der Produktaufreinigung bei der Kondensation der Brüden in der oder den Destillationskolonnen anfällt.

Es versteht sich, dass die genannten Produktionsanlagen nur Beispiele sind und jedwede sonstige Produktionsanlage, in der chemische und/oder pharmazeutische und/oder biotechnologische Erzeugnisse oder Stoffe her- oder bereitgestellt werden, eingesetzt werden kann.

Die im erfindungsgemäßen Verfahren eingesetzten Wärmeträger A und B können grundsätzlich jeder Wärmeträger sein, mit dem die jeweilige Aufnahme an Energie in dem entsprechenden Wärmeträger möglich ist. Die Wärmeträger A und B können deshalb ganz allgemein jeweils unabhängig voneinander aus der Gruppe, bestehend aus Wasser; Alkoholen; Alkohol-Wasser-Mischungen; Salz-Wasser-Lösungen; Ammoniak; Mineralöle, wie zum Beispiel Dieselöle; Thermalölen, wie zum Beispiel Silikonöle; biologische Ölen, wie zum Beispiel Limonen; und aromatischen oder aliphatischen Kohlenwasserstoffen, wie zum Beispiel Dibenzyltoluol ausgewählt werden. Der Wärmeträger A ist vorzugsweise Wasser, Methanol, Ethanol, Propanol, n-Pentan, n-Butan, n-Hexan, n-Propan oder Ammoniak.

Das vorliegende Verfahren umfasst mindestens die beiden Verfahrensschritte a) und b) und umfasst vorzugsweise zusätzlich den Verfahrensschritt c).

### Verfahrensschritt a)

Im Verfahrensschritt a) wird der Wärmeträger A durch die Energieübertragung in zumindest den Wärmeträgern WA1 und WA2 unter Erhalt des Wärmeträgers A1 erhitzt und zumindest teilweise verdampft. Der Wärmeträger A1 wird danach im Verdichter mehrstufig unter Erhalt des Wärmeträgers A2 verdichtet und anschließend unter Erhalt des Wärmeträgers A3 als Heizmedium innerhalb mindestens einer Produktionsanlage im Produktionsstandort eingesetzt.

Der Wärmeträger A in Verfahrensschritt a) kann aus der oben genannten Liste von möglichen Wärmeträger ausgewählt werden. In einer bevorzugten Ausführungsform der vorliegenden Erfindung ist der Wärmeträger A in Verfahrensschritt a) n-Butan.

Die Übertragung von Energie auf den Wärmeträger A kann nach dem Fachmann bekannten Verfahren oder mit dem Fachmann bekannten Wärmeträgern, beispielsweise den bereits erwähnten Verdampfern, durchgeführt werden. Geeignete Verdampfer zum Beispiel Naturumlaufverdampfer, Zwangsumlaufverdampfer, Zwangsumlaufverdampfer mit Entspannung, Kesselverdampfer, Fallfilmverdampfer oder Dünnschichtverdampfer. Als Wärmeträger für den Verdampfer wird bei Naturumlaufverdampfern und Zwangsumlaufverdampfern üblicherweise ein Rohrbündel oder Plattenapparat eingesetzt. Neben den genannten kann aber auch jede beliebige andere, dem Fachmann bekannte Verdampferbauart, die sich zum Einsatz an einer Destillationskolonne eignet, eingesetzt werden. In allen genannten Typen können die strukturierten Wärmeträgerrohre eingesetzt werden.

Im Rahmen der vorliegenden Erfindung können auch Verdampfer eingesetzt werden, die strukturierte Wärmeträgerrohre mit mindestens einem strukturierten Bereich umfassen.

Strukturierte Wärmeträgerrohre im Rahmen der vorliegenden Erfindung sind als Rohre zu verstehen, die mindestens einen strukturierten Bereich umfassen. Ein strukturierter Bereich zeichnet sich dabei durch ein wiederkehrendes Muster aus. Beispiele dafür sind Rippen bzw. Kanäle. Entsprechende Rohre sind dem Fachmann beispielsweise aus der EP 1 312 885 A2, der EP 1 830 151 A1, der WO 2017/207091 A1 oder der WO 2022/106045 A1 bekannt.

Die strukturierten Wärmeträgerrohre weisen vorzugsweise mehr als einen, also mehrere strukturierte Bereiche auf. Sofern mehrere strukturierte Bereiche vorliegen, ist es bevorzugt, dass die strukturierten Wärmeträgerrohre die strukturierten Bereiche auf der Rohrinnen- und/oder Rohraußenseite aufweisen. Bevorzugt ist sowohl auf der Rohrinnen- als auch der Rohraußenseite mindestens ein strukturierter Bereich vorhanden. In einer besonders bevorzugten Ausführungsform der vorliegenden Erfindung umfassen die strukturierten Bereiche kontinuierlich oder diskontinuierlich verlaufende achsparallele oder helixförmig umlaufende Rippen. Möglich sind auch Oberflächenstrukturen, die als re-entrant surfaces bezeichnet werden. Beispiele für solche Wärmeträgerrohre mit re-entrant surfaces werden von der Firma Wieland unter dem Produktnamen GEWA-B vertrieben.

Die strukturierten Wärmeträgerrohre haben den Vorteil, dass der Wärmeübergang zwischen den Medien im Wärmeträger verbessert wird. Der verbesserte Wärmeübergang sorgt zum einen dafür, dass man eine niedrige Temperaturdifferenz realisieren kann und zum anderen, dass dadurch die strukturierten Rohre im Vergleich zu Standardrohren kleiner ausgeführt werden. Der Einsatz strukturierter Wärmeträgerrohre hat dadurch auch den Vorteil, dass weitere Verdichterleistung und damit elektrische Energie (Stromkosten) eingespart werden kann. Die strukturierten Bereiche bewirken einen verbesserten Wärmeaustausch zwischen den Medien in den Sumpfverdampfern.

Nach der beschriebenen Energieübertragung den Wärmeträger A weist der Wärmeträger A1 gegenüber dem als Wärmeträger A, vorzugsweise dem als Wärmeträger A eingesetzten Wasser eine erhöhte Temperatur und optional einen erhöhten Druck auf. In einer bevorzugten Ausführungsform der vorliegenden Erfindung erfolgt die Energieübertragung auf den Wärmeträger A bei 75°C oder mehr, vorzugsweise bei 79 °C oder mehr. Die Energieübertragung auf das als Wärmeträger A eingesetzte Wasser erfolgt vorzugsweise im leichten Vakuum im Bereich von 100 bis 800 mbar, vorzugsweise 200 bis 700 mbar, besonders bevorzugt 250 bis 600 mbar.

Der Wärmeträger A1 wird anschließend mehrfach unter Erhalt des Wärmeträger A2 verdichtet. Geeignete Verdichter für diese Verdichtung sind zum Beispiel ein- oder mehrstufige Getriebeturboverdichter, Kolbenverdichter, Schraubenverdichter, Zentrifugalverdichter oder Axialverdichter. Bevorzugt ist, wenn ein Getriebeturboverdichter, ein Kolbenverdichter oder ein Schraubenverdichter als Verdichter eingesetzt wird. Der Wärmeträger A2 weist anschließend einen höheren Druck auf als der Wärmeträger A1.

Der Wärmeträger A2 wird dann in zumindest einer der im Produktionsstandort vorhandenen Produktionsanlagen als Heizmedium eingesetzt. Dadurch wird der Wärmeträger A2 zumindest teilweise kondensieren und fällt als Wärmeträger A3 an. Nach dem Einsatz als Heizmedium wird der Wärmeträger A3 vorzugsweise zu den jeweils vorliegenden Wärmeträgern, also zumindest zu WA1 und/oder WA2 zurückgeführt und fällt dort als Wärmeträger A an. Dort findet erneut eine Übertragung von Wärmeenergie auf den Wärmeträger A statt. Es handelt sich also vorzugsweise um einen Wärmeträgerkreislauf.

### Verfahrensschritt b)

Im Verfahrensschritt b) wird der Wärmeträger B durch Energieübertragung zumindest in dem Wärmeträger WB1 unter Erhalt des Wärmeträgers B1 erhitzt und zumindest teilweise verdampft. Der Wärmeträger B1 wird danach im Verdichter ein- mehrstufig, vorzugsweise mehrstufig unter Erhalt des Wärmeträgers B2 verdichtet und anschließend unter Erhalt des Wärmeträgers B3 als Heizmedium innerhalb mindestens einer Produktionsanlage im Produktionsstandort eingesetzt.

Der Wärmeträger B in Verfahrensschritt b) kann aus der oben genannten Liste von möglichen Wärmeträger ausgewählt werden. In einer bevorzugten Ausführungsform der vorliegenden Erfindung ist der Wärmeträger B in Verfahrensschritt b) Methanol.

Die Übertragung von Energie auf den Wärmeträger B kann nach dem Fachmann bekannten Verfahren oder mit dem Fachmann bekannten Wärmeträgern, beispielsweise den bereits erwähnten Verdampfern, durchgeführt werden. Geeignete Verdampfer zum Beispiel Naturumlaufverdampfer, Zwangsumlaufverdampfer, Zwangsumlaufverdampfer mit Entspannung, Kesselverdampfer, Fallfilmverdampfer oder Dünnschichtverdampfer. Als Wärmeträger für den Verdampfer wird bei Naturumlaufverdampfern und Zwangsumlaufverdampfern üblicherweise ein Rohrbündel oder Plattenapparat eingesetzt. Neben den genannten kann aber auch jede beliebige andere, dem Fachmann bekannte Verdampferbauart, die sich zum Einsatz an einer Destillationskolonne eignet, eingesetzt werden. In allen genannten Typen können die strukturierten Wärmeträgerrohre eingesetzt werden.

Im Rahmen der vorliegenden Erfindung können auch Verdampfer eingesetzt werden, die strukturierte Wärmeträgerrohre mit mindestens einem strukturierten Bereich umfassen.

Strukturierte Wärmeträgerrohre im Rahmen der vorliegenden Erfindung sind als Rohre zu verstehen, die mindestens einen strukturierten Bereich umfassen. Ein strukturierter Bereich zeichnet sich dabei durch ein wiederkehrendes Muster aus. Beispiele dafür sind Rippen bzw. Kanäle. Entsprechende Rohre sind dem Fachmann beispielsweise aus der EP 1 312 885 A2, der EP 1 830 151 A1, der WO 2017/207091 A1 oder der WO 2022/106045 A1 bekannt.

Die strukturierten Wärmeträgerrohre weisen vorzugsweise mehr als einen, also mehrere strukturierte Bereiche auf. Sofern mehrere strukturierte Bereiche vorliegen, ist es bevorzugt, dass die strukturierten Wärmeträgerrohre die strukturierten Bereiche auf der Rohrinnen- und/oder Rohraußenseite aufweisen. Bevorzugt ist sowohl auf der Rohrinnen- als auch der Rohraußenseite mindestens ein strukturierter Bereich vorhanden. In einer besonders bevorzugten Ausführungsform der vorliegenden Erfindung umfassen die strukturierten Bereiche kontinuierlich oder diskontinuierlich verlaufende achsparallele oder helixförmig umlaufende Rippen. Möglich sind auch Oberflächenstrukturen, die als re-entrant surfaces bezeichnet werden. Beispiele für solche Wärmeträgerrohre mit re-entrant surfaces werden von der Firma Wieland unter dem Produktnamen GEWA-B vertrieben.

Die strukturierten Wärmeträgerrohre haben den Vorteil, dass der Wärmeübergang zwischen den Medien im Wärmeträger verbessert wird. Der verbesserte Wärmeübergang sorgt zum einen dafür, dass man eine niedrige Temperaturdifferenz realisieren kann und zum anderen, dass dadurch die strukturierten Rohre im Vergleich zu Standardrohren kleiner ausgeführt werden. Der Einsatz strukturierter Wärmeträgerrohre hat dadurch auch den Vorteil, dass weitere Verdichterleistung und damit elektrische Energie (Stromkosten) eingespart werden kann. Die strukturierten Bereiche bewirken einen verbesserten Wärmeaustausch zwischen den Medien in den Sumpfverdampfern.

Nach der beschriebenen Energieübertragung auf den Wärmeträger B weist der Wärmeträger B1 gegenüber dem Wärmeträger B eine erhöhte Temperatur und optional einen erhöhten Druck auf. In einer bevorzugten Ausführungsform der vorliegenden Erfindung erfolgt die Energieübertragung auf den Wärmeträger B bei 80°C oder weniger, vorzugsweise bei 75 °C oder weniger. Die Energieübertragung auf den Wärmeträger B erfolgt vorzugsweise im leichten Überdruck im Bereich von 100 bis 800 mbar, vorzugsweise 200 bis 700 mbar, besonders bevorzugt 250 bis 600 mbar.

Der Wärmeträger B1 wird anschließend ein- oder mehrfach, vorzugsweise mehrfach unter Erhalt des Wärmeträger B2 verdichtet. Geeignete Verdichter für diese Verdichtung sind zum Beispiel ein- oder mehrstufige Getriebeturboverdichter, Kolbenverdichter, Schraubenverdichter, Zentrifugalverdichter oder Axialverdichter. Bevorzugt ist, wenn ein Getriebeturboverdichter, ein Kolbenverdichter oder ein Schraubenverdichter als Verdichter eingesetzt wird. Der Wärmeträger B2 weist anschließend einen höheren Druck auf als der Wärmeträger B1.

Der Wärmeträger B2 wird dann in zumindest einer der im Produktionsstandort vorhandenen Produktionsanlagen als Heizmedium eingesetzt. Dadurch wird der Wärmeträger B2 zumindest teilweise kondensieren und fällt als Wärmeträger B3 an. Nach dem Einsatz als Heizmedium wird der Wärmeträger B3 vorzugsweise zu den jeweils vorliegenden Wärmeträgern, also zumindest zu WB1 zurückgeführt und fällt dort als Wärmeträger B an. Dort findet erneut eine Übertragung von Wärmeenergie auf den Wärmeträger B statt. Es handelt sich also vorzugsweise um einen Wärmeträgerkreislauf.

In einer bevorzugten Ausführungsform der vorliegenden Erfindung sind die beiden Schritte a) und b) miteinander gekoppelt. Das bedeutet, dass der Einsatz des Wärmeträgers A2 als Heizmedium in Schritt a) zumindest in der gleichen Produktionsanlage erfolgt, in der in Schritt b) Wärmeenergie auf den Wärmeträger B übertragen wird. Das ist beispielsweise dadurch möglich, dass das Heizmedium A2 zur Beheizung einer Destillation eingesetzt wird und die bei dieser Destillation anfallende Kondensationswärme zumindest teilweise auf den Wärmeträger B übertragen wird.

### Optionaler Verfahrensschritt c)

In einer bevorzugten Ausführungsform der vorliegenden Erfindung umfasst das Wärmeintegrationsnetzwerk zusätzlich mindestens noch einen Wärmeträger WC1 in einer der vorhandenen Produktionsanlagen, wobei in dem Wärmeträger WC1 Wärmeenergie auf einen Wärmeträger C übertragen wird. Das Verfahren umfasst in diesem Fall einen zusätzlichen Verfahrensschritt c).

Im Verfahrensschritt c) wird der Wärmeträger C durch Energieübertragung in zumindest dem Wärmetauscher WC1 unter Erhalt des Wärmeträgers C1 erhitzt und zumindest teilweise verdampft. Der Wärmeträger C1 wird danach in einem Verdichter ein- oder mehrstufig, vorzugsweise unter Erhalt des Wärmeträger C2 verdichtet und anschließend unter Erhalt des Wärmeträger C3 als Heizmedium innerhalb mindestens einer Produktionsanlage im Produktionsstandort eingesetzt.

Der Wärmeträger C, der im Verfahrensschritt c) eingesetzt wird, kann aus der oben genannten Liste von möglichen Wärmeträgern für die Wärmeträger A und B ausgewählt werden. In einer bevorzugten Ausführungsform der vorliegenden Erfindung ist der Wärmeträger C Wasser und es wird ein Heizdampf erzeugt. Der Wärmeträger C wird in diesem Fall durch Energieübertragung in zumindest dem Wärmetauscher WC1 unter Erhalt des Wärmeträgers C1 erhitzt und zumindest teilweise verdampft. Der Wärmeträger C1 wird danach in einem Verdichter mehrstufig unter Erhalt des Wärmeträger C2 verdichtet und anschließend unter Erhalt des Wärmeträger C3 als Heizdampf innerhalb mindestens einer Produktionsanlage im Produktionsstandort eingesetzt.

Nach der beschriebenen Energieübertragung den Wärmeträger C, vorzugsweise auf das als Wärmeträger C eingesetzte Wasser, weist der Wärmeträger C1 gegenüber dem Wärmeträger C, vorzugsweise dem als Wärmeträger C eingesetzten Wasser eine erhöhte Temperatur und optional einen erhöhten Druck auf. In einer bevorzugten Ausführungsform der vorliegenden Erfindung erfolgt die Energieübertragung auf das als Wärmeträger C eingesetzte Wasser bei 75°C oder mehr, vorzugsweise bei 79 °C oder mehr. Die Energieübertragung auf das als Wärmeträger W eingesetzte Wasser erfolgt vorzugsweise im leichten Vakuum im Bereich von 100 bis 800 mbar, vorzugsweise 200 bis 700 mbar, besonders bevorzugt 250 bis 600 mbar.

In einer weiterhin bevorzugten Ausführungsform wird aus dem als Wärmeträger C1 vorliegenden Wasser nach dem Verdampfen und vor der mehrstufigen Verdichtung zunächst mit einem Gebläse ein Schlappdampf erzeugt, der einen Druck im Bereich von 1 bis 5 bar und eine Temperatur im Bereich von 100 bis 160 °C aufweist.

Der Wärmeträger C1 wird anschließend ein.- oder mehrfach, vorzugsweise mehrfach unter Erhalt des Wärmeträger C2 verdichtet. Geeignete Verdichter für diese Verdichtung sind zum Beispiel ein- oder mehrstufige Getriebeturboverdichter, Kolbenverdichter, Schraubenverdichter, Zentrifugalverdichter oder Axialverdichter. Bevorzugt ist, wenn ein Getriebeturboverdichter, ein Kolbenverdichter oder ein Schraubenverdichter als Verdichter eingesetzt wird. Der Wärmeträger C2 weist anschließend einen höheren Druck auf als der Wärmeträger C1.

Der Wärmeträger C2 wird dann in zumindest einer der im Produktionsstandort vorhandenen Produktionsanlagen als Heizmedium eingesetzt. Dadurch wird der Wärmeträger C2 zumindest teilweise kondensieren und fällt als Wärmeträger C3 an. Nach dem Einsatz als Heizmedium wird der Wärmeträger C3 vorzugsweise zu den jeweils vorliegenden Wärmeträgern, also zumindest zu WC1 zurückgeführt und fällt dort als Wärmeträger C an. Dort findet erneut eine Übertragung von Wärmeenergie auf den Wärmeträger C statt. Es handelt sich also vorzugsweise um einen Wärmeträgerkreislauf.

Der als Wärmeträger C1 vorliegende Wasserstrom wird mehrfach verdichtet. Geeignete Verdichter für diese Verdichtung sind zum Beispiel ein- oder mehrstufige Getriebeturboverdichter, Kolbenverdichter, Schraubenverdichter, Zentrifugalverdichter oder Axialverdichter. Bevorzugt ist, wenn ein Getriebeturboverdichter, ein Kolbenverdichter oder ein Schraubenverdichter als Verdichter eingesetzt wird.

In einer weiteren bevorzugten Ausführungsform der vorliegenden Erfindung wird bei der mehrstufigen Verdichtung des als Wärmeträger C1 vorliegenden Wasserstroms ein Verdichter eingesetzt wird, der mindestens einen Seitenabzug aufweist, an dem ein Heizdampf einer anderen Druckstufe entnommen wird. Besonders bevorzugt ist es, wenn der Verdichter mindestens zwei Seitenabzüge aufweist, an denen jeweils Heizdämpfe unterschiedlicher Druckstufen entnommen werden. Typische Druckstufen von Heizdämpfen, die in Produktionsstandorten vorhanden sein können und damit erfindungsgemäß erzeugt werden können sind der Niederdruckdampf (Druck: 1 bis 6 bar, Temperatur: 110 bis 150 °C), der Mitteldruckdampf (Druck: 10 bis 30 bar, Temperatur: 160 bis 235 °C) und der Hochdruckdampf (Druck: 35 bis 90 bar, Temperatur: 250 bis 320 °C).

In einer bevorzugten Ausführungsform der vorliegenden Erfindung sind die beiden Schritte b) und c) miteinander gekoppelt. Das bedeutet, dass der Einsatz des Wärmeträgers B2 als Heizmedium in Schritt b) zumindest in der gleichen Produktionsanlage erfolgt, in der in Schritt c) Wärmeenergie auf den Wärmeträger C übertragen wird. Das ist beispielsweise dadurch möglich, dass das Heizmedium B2 zur Beheizung einer Destillation eingesetzt wird und die bei dieser Destillation anfallende Kondensationswärme zumindest teilweise auf den Wärmeträger C übertragen wird.

Es ist erfindungsgemäß weiterhin bevorzugt, dass die Wärmeträger A und B unterschiedlich voneinander sind. In einer bevorzugten Ausgestaltung der Erfindung sind die Wärmeträger A, B und C sind unterschiedlich voneinander. In einer besonders bevorzugten Ausgestaltung ist der Wärmeträger A n-Butan, der Wärmeträger B Methanol und der Wärmeträger C Wasser.

In einer weiterhin bevorzugten Ausführungsform, erfolgt der Einsatz des Wärmeträgers A3 in Schritt a) und/oder der Einsatz des Wärmeträgers B3 in Schritt b) und/oder der Einsatz des Wärmeträgers C3 in Schritt c) als Heizmedium in mindestens zwei unterschiedlichen Produktionsanlagen. In diesem Fall liegen im erfindungsgemäßen Verfahren mindestens vier, vorzugsweise mindestens fünf, besonders bevorzugt mindestens sechs unterschiedliche Produktionsanlagen im chemischen Produktionsstandort vor.

Es ist erfindungsgemäß weiterhin bevorzugt, wenn alle drei Verfahrensschritte a), b) und c) einen Wärmeträgerkreislauf darstellen. Das bedeutet, dass die Wärmeträger A3, B3 und C3 nach dem Einsatz als Heizmedium zu den mindestens vorliegenden Wärmetauschern WA1, WA2, WB1 und WC1 zurückgeführt wird und erneut Wärmeenergie auf den jeweiligen dann als Wärmeträger A, B und C vorliegenden Wärmeträger übertragen wird. Beim Zurückführen wird in einer bevorzugten Ausgestaltung Wärmeenergie von den zurückgeführten Wärmeträgern A3 und/oder B3 und/oder C3 auf den jeweiligen Wärmeträger A1 und/oder B1 und/oder C1 vor der Verdichtung übertragen, um den Wärmeträger A1 und/oder B1 und/oder C1 zu überhitzen. Dadurch wird das Risiko von Tröpfchenbildung im Verdichter verringert. Verdichter können aufgrund von Tröpfchenbildung beschädigt werden.

Sofern mehr als drei unterschiedliche Produktionsanlagen vorliegen, umfasst das Wärmeintegrationsnetzwerk auch mehr als drei Wärmeträger. Es ist allgemein bevorzugt, wenn der chemische Produktionsstandort mindestens vier, weiterhin bevorzugt mindestens fünf, besonders bevorzugt mindestens sechs Produktionsanlagen umfasst.

Es ist deshalb bevorzugt, dass ein weiterer Wärmetauscher WB2 in einer der vorhandenen Produktionsanlagen vorliegt, in dem Wärmeenergie auf den Wärmeträger B übertragen wird. In einer besonders bevorzugten Ausgestaltung der vorliegenden Erfindung liegt mindestens ein weiterer Wärmetauscher WB3 in einer der vorhandenen Produktionsanlagen vor, in dem Wärmeenergie auf den Wärmeträger B übertragen wird.

Es ist deshalb außerdem bevorzugt, dass ein weiterer Wärmetauscher WC2 in einer der vorhandenen Produktionsanlagen vorliegt, in dem Wärmeenergie auf den Wärmeträger C übertragen wird. In einer besonders bevorzugten Ausgestaltung der vorliegenden Erfindung liegt mindestens ein weiterer Wärmetauscher WC3 in einer der vorhandenen Produktionsanlagen vor, in dem Wärmeenergie auf den Wärmeträger C übertragen wird.

Die vorliegende Erfindung wird anhand der nachfolgenden Zeichnung erläutert, die beispielhaften Charakter hat.

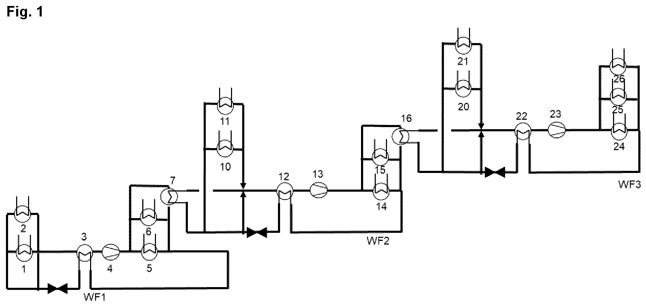

Fig.1 ist eine Skizze des Verfahrensablaufs, auf dessen Grundlage die Simulation im weiter unten beschriebenen Beispiel erstellt worden ist. In der Skizze sind drei Wärmeträgerkreisläufe (WF1, WF2 und WF3) dargestellt, die miteinander verknüpft sind. Mit dem Wärmeträger A wird im ersten Kreislauf (WF1) über die Wärmeträger (1, 2) Wärmeenergie eingesammelt, über den Vorwärmer (3) vorgewärmt, im Verdichter (4) verdichtet und anschließend zur Beheizung in den Wärmeträgern (5, 6) eingesetzt. Mit dem Wärmeträger B wird im zweiten Kreislauf (WF2) über die Wärmeträger (7, 10, 11) Wärmeenergie eingesammelt, über den Vorwärmer (12) vorgewärmt, im Verdichter (13) verdichtet und anschließend zur Beheizung in den Wärmeträgern (14, 15) eingesetzt. Der Wärmeträger (7) befindet sich in der gleichen Produktionsanlage wie der Wärmeträger (6), über den die Produktionsanlage beheizt wird. Mit dem Wärmeträger C wird im zweiten Kreislauf (WF3) über die Wärmeträger (16, 20, 21) Wärmeenergie eingesammelt, über den Vorwärmer (22) vorgewärmt, im Verdichter (23) verdichtet und anschließend zur Beheizung in den Wärmeträgern (24, 25, 26) eingesetzt. Der Wärmeträger (16) befindet sich in der gleichen Produktionsanlage wie der Wärmeträger (15), über den die Produktionsanlage beheizt wird.

Die vorliegende Erfindung wird nachfolgend anhand eines Beispiels illustriert. Dieses Beispiel lässt sich beliebig variieren und stellt keine Einschränkung dar.

### Beispiel

Die für den Betrieb, der in den Beispielen dargestellten Anlagen notwendige Menge an Energie zur Beschreibung des Wärmepumpennetzwerks wurde anhand von Simulationen mittels Aspen Plus V12 errechnet. Die Stoffdaten und das kinetische Modell wurden durch Betriebsdaten und Betriebsversuche validiert.

Fig. 1 zeigt das erfindungsgemäße Verfahren. Mit dem Wärmeträger A n-Butan (in WF1) werden Abwärmen auf einem geringen Temperaturniveau (geringer als 45°C) eingesammelt. In diesem Beispiel werden 5,1 MW Kondensationswärme bei 40°C aus einer 1-Buten Destillation am Kondensator (1) genutzt, um 73 t/h n-Butan bei 3,3 bar abs. und 35°C zu verdampfen. Ferner werden 3,1 MW Reaktionswärme einer Crack-C4-Hydrierung durch Reaktorkühlung (2) bei 40°C eingesetzt, um 45 t/h n-Butan bei 3,3 bar abs. und 35°C zu verdampfen. Bevor das Arbeitsfluid einer mehrstufigen Verdichtung unterzogen wird, wird der Wärmeträger um 16K im Vorwärmer (3) überhitzt, um während der Verdichtung nicht zweiphasig vorzuliegen. Mit einem zweistufigen Turboverdichter (4) wird der gesamte Wärmeträger A n-Butan auf ein höheres Druckniveau von etwa 12 bar abs. verdichtet. Hierzu ist eine Verdichterleistung von 1,8 MW erforderlich. In dem ersten Wärmepumpenkreislauf wird ein Temperaturniveau von 75°C bereitgestellt, um einen Verdampfer (5) bei einer C3-Abtrennung in einer Butadienanlage zu betreiben. Hier werden 5 MW Verdampferleistung bei 65°C eingesetzt. In einem weiteren Wärmeträger (6) werden 4 MW für einen n/i-Butan Splitter bei 65°C eingesetzt. In einem weiteren Wärmeträger (7) wird der Wärmeträger B Methanol bei 1,3 bar und 70°C verdampft. Hier wird eine Wärmemenge von 1 MW übertragen. In Summe werden im ersten Kreislauf (WF1) 10 MW übertragen. Bei einer Verdichterleistung von 1,8 MW resultiert ein COP (Coefficient of Performance) von 5,6. Der kondensierte Wärmeträger A n-Butan wird nach der Vorwärmung/Überhitzung einem Flashvorgang unterzogen. Der gasförmige Anteil wird dem Verdichter (4) zugeführt. Die flüssige Phase wird im Kreislauf den Wärmeträgern (1 und 2) zugeführt.

In dem zweiten Kreislauf (WF2) wird die Restwärme aus dem ersten Wärmepumpenkreislauf genutzt, um im Wärmeträger (7) 4 t/h des Wärmeträgers B Methanol zu verdampfen. Ferner wird eine Reaktionswärme von 3,3 MW einer Oligomerisierungsstufe bei 85°C genutzt, um 13 t/h Methanol in dem Wärmeträger (10) zu verdampfen. Des Weiteren wird eine Kondensationswärme von 3,9 MW einer Vakuumdestillationskolonne genutzt, um 15 t/h Methanol in dem Wärmeträger (11) zu verdampfen. In Summe werden 32 t/h Methanol einer dreistufigen Verdichtung mit einem Getriebeturboverdichter (13) unterzogen. Der Vorwärmer (12) sorgt für eine Überhitzung des gasförmigen Methanols um 5K. In dem zweiten Wärmepumpenkreislauf (WF2) wird der Wärmträger B auf einem Temperaturniveau von 120°C bereitgestellt. Hierzu wird Methanol auf 7,4 bar abs. (Kondensationstemperatur 125°C, DT = 5K) verdichtet. 4,5 MW werden im Wärmeträger (14) für die Schwersiederabtrennung in einer FCC-C4 Aufarbeitung verwendet. 4 MW davon werden im Wärmeträger (15) für das Betreiben einer Wasser/Methanolkolonne eingesetzt. Im Wärmeträger (16) werden 1,5 MW genutzt, um den Wärmeträger C des dritten Kreislaufs (WF3) zu verdampfen. Als Wärmeträger C wird Wasser eingesetzt. In Summe werden auch in diesem zweiten Kreislauf (WF2) 10 MW thermisch übertragen. Bei einer elektrischen Leistung von 1,8 MW resultiert auch in dem zweiten Wärmepumpenkreislauf (WF2) ein COP von 5,6.

In dem dritten Kreislauf (WF3) werden neben der Restwärme des zweiten Kreislaufs von 1,5 MW, die im Wärmeträger (17) eingesammelt wird, im Wärmeträger (20) 6 MW Kondensationswärme einer MSBE-Destillationskolonne einer MTBE-Spaltung und im Wärmeträger (21) 1 MW einer Isononanal-Reinkolonne genutzt um in Summe 16 t/h Wasser bei 1,7 bar abs. und 115°C zu verdampfen. Der Wasserdampf wird ebenfalls einer Überhitzung von 5K im Vorwärmer (22) unterzogen. In einer dreistufigen Verdichtermaschine (23) ist eine elektrische Verdichterleistung von 1,5 MW erforderlich, um einen Dampf bei 7 bar abs. (Kondensationstemperatur 165°C) bereitzustellen. In Summe können 10 MW thermische Heizleistung bereitgestellt werden. Es resultiert ein COP von 6,9. Dieser Dampf wird eingesetzt um im Wärmeträger (24) eine MTBE-Reaktivdestillationskolonne mit 3 MW zu beheizen. Ferner werden im Wärmeträger (25) 5 MW eingesetzt, um den Desorber einer Butadienanlage zu betreiben. Weitere 2 MW werden im Wärmeträger (26) eingesetzt, um eine Butan-Buten-Trennung beheizen.

In Summe werden 30 MW thermische Heizleistung in dem Wärmepumpennetzwerk mit den drei Kreisläufen (WF1, WF2, und WF3) bereitgestellt. Hierzu müssen insgesamt 5,1 MW elektrische Verdichterleistung in allen Verdichtern (4, 13 und 23) bereitgestellt werden. Das resultiert in einem COP von 5,8.

Würde man im ersten Kreislauf im Vergleich dazu die dort eingesammelt Abwärme mit n-Pentan als Wärmeträger direkt auf ein Temperaturniveau von 160°C heben, ergäbe sich nur ein COP von 1,7. Es würde eine elektrische Verdichterleistung von 17,9 MW dazu benötigt. Im Vergleich zu dem gestuften erfindungsgemäßen Verfahren resultiert eine Einsparung von 12 MW.

## Patentansprüche

1. Verfahren zur energetischen Optimierung eines chemischen Produktionsstandorts mithilfe mindestens eines Wärmeintegrationsnetzwerks,
wobei der chemische Produktionsstandort mindestens drei unterschiedliche Produktionsanlagen und das mindestens eine Wärmeintegrationsnetzwerk die Wärmeträger WA1 und WA2 in je einer der vorhandenen Produktionsanlagen, in denen Wärmeenergie auf einen Wärmeträger A übertragen wird, mindestens einen weiteren Wärmeträger WB1 in einer der vorhandenen Produktionsanlagen, in dem Wärmeenergie auf einen Wärmeträger B übertragen wird, und mindestens einen Verdichter umfasst;
wobei die auf den Wärmeträger übertragene Wärmeenergie an einer Stelle innerhalb einer Produktionsanlage anfällt und mithilfe eines Wärmeträgers abgenommen wird;
wobei das Verfahren zumindest die nachfolgenden Schritte umfasst:
a) der Wärmeträger A durch die Energieübertragung zumindest in den Wärmeträgern WA1 und WA2 unter Erhalt des Wärmeträgers A1 erhitzt und zumindest teilweise verdampft; der Wärmeträger A1 danach im Verdichter ein- oder mehrstufig, vorzugsweise mehrstufig unter Erhalt des Wärmeträgers A2 verdichtet und anschließend unter Erhalt des Wärmeträgers A3 als Heizmedium innerhalb mindestens einer Produktionsanlage im Produktionsstandort eingesetzt wird; und
b) der Wärmeträger B durch Energieübertragung zumindest in dem Wärmeträger WB1 unter Erhalt des Wärmeträgers B1 erhitzt und zumindest teilweise verdampft; der Wärmeträger B1 danach im Verdichter ein- oder mehrstufig, vorzugsweise mehrstufig unter Erhalt des Wärmeträgers B2 verdichtet und anschließend unter Erhalt des Wärmeträgers B3 als Heizmedium innerhalb mindestens einer Produktionsanlage im Produktionsstandort eingesetzt wird.

2. Verfahren nach Anspruch 1, wobei eine Produktionsanlage mindestens eine Destillationskolonne oder mindestens einen Reaktor umfasst.

3. Verfahren nach Anspruch 1 oder 2, wobei die beiden Schritte a) und b) miteinander gekoppelt sind, d. h. der Einsatz des Wärmeträgers A2 als Heizmedium in Schritt a) zumindest in der gleichen Produktionsanlage erfolgt, in der in Schritt b) Wärmeenergie auf den Wärmeträger B übertragen wird.

4. Verfahren nach einem der vorhergehenden Ansprüche, wobei die Wärmeträger A und B jeweils unabhängig voneinander aus der Gruppe, bestehend aus Alkoholen; Alkohol-Wasser-Mischungen;
Salz-Wasser-Lösungen; Ammoniak; Mineralöle, wie zum Beispiel Dieselöle; Thermalölen, wie zum Beispiel Silikonöle; biologische Ölen, wie zum Beispiel Limonen; und aromatischen oder aliphatischen Kohlenwasserstoffen, wie zum Beispiel Dibenzyltoluol ausgewählt werden, vorzugsweise aus der Gruppe, bestehend aus Methanol, Ethanol, Propanol, n-Pentan, n-Butan, n-Hexan, n-Propan oder Ammoniak ausgewählt werden.

5. Verfahren nach einem der vorhergehenden Ansprüche, wobei das Wärmeintegrationsnetzwerk zusätzlich mindestens noch einen Wärmeträger WC1 in einer der vorhandenen Produktionsanlagen umfasst, in dem Wärmeenergie auf einen Wärmeträger C übertragen wird, und
in einem Schritt c) der Wärmeträger C durch Energieübertragung zumindest in dem Wärmeträger WC1 unter Erhalt des Wärmeträgers C1 erhitzt und zumindest teilweise verdampft; der Wärmeträger C1 danach im Verdichter mehrstufig unter Erhalt des Wärmeträger C2 verdichtet und anschließend unter Erhalt des Wärmeträger C3 als Heizmedium innerhalb mindestens einer Produktionsanlage im Produktionsstandort eingesetzt wird.

6. Verfahren nach Anspruch 5, wobei die Wärmeträger A, B und C unterschiedliche Wärmeträger sind.

7. Verfahren nach einem der vorherigen Ansprüche, wobei der Wärmeträger C Wasser ist und in Schritt c) Heizdampf als Heizmedium innerhalb des Produktionsstandorts eingesetzt wird.

8. Verfahren nach Anspruch 7, wobei die Energieübertragung auf das Wasser bei 75°C oder mehr erfolgt, vorzugsweise im leichten Vakuum im Bereich von 100 bis 800 mbar, vorzugsweise 200 bis 700 mbar, besonders bevorzugt 250 bis 600 mbar.

9. Verfahren einem der Ansprüche 7 oder 8, wobei aus dem Wasser nach dem Verdampfen und vor der mehrstufigen Verdichtung zunächst mit einem Gebläse ein Schlappdampf erzeugt wird, der einen Druck im Bereich von 1 bis 5 bar und eine Temperatur von 100 bis 160 °C aufweist.

10. Verfahren nach Anspruch 9, wobei bei der mehrstufigen Verdichtung des Wassers ein Verdichter eingesetzt wird, der mindestens einen Seitenabzug aufweist, an dem ein Heizdampf einer anderen Druckstufe entnommen wird.

11. Verfahren nach Anspruch 10, wobei der Verdichter mindestens zwei Seitenabzüge aufweist, an denen jeweils Heizdämpfe unterschiedlicher Druckstufen entnommen werden.

12. Verfahren nach einem der vorhergehenden Ansprüche, wobei die beiden Schritte b) und c) miteinander gekoppelt sind, d. h. der Einsatz des Wärmeträgers B2 als Heizmedium in Schritt b) zumindest in der gleichen Produktionsanlage erfolgt, in der in Schritt c) Wärmeenergie auf den Wärmeträger C übertragen wird.

13. Verfahren nach einem der vorhergehenden Ansprüche, wobei die Wärmeträger A3, B3 und C3 nach dem Einsatz als Heizmedium zu den mindestens vorliegenden Wärmetauschern WA1, WA2, WB1 und WC1 zurückgeführt und erneut Wärmeenergie auf den jeweiligen dann als Wärmeträger A, B und C vorliegenden Wärmeträger übertragen wird.

14. Verfahren nach Anspruch 14, wobei beim Zurückführen Wärmeenergie von den zurückgeführten Wärmeträgern A3 und/oder B3 und/oder C3 auf den jeweiligen Wärmeträger A1 und/oder B1 und/oder C1 vor der Verdichtung übertragen, um den Wärmeträger A1 und/oder B1 und/oder C1 zu überhitzen wird.

15. Verfahren nach einem der vorhergehenden Ansprüche, wobei die auf den Wärmeträger übertragene Wärmeenergie Reaktionswärme, die durch Kühlen bei einer exothermen Reaktion anfällt, Adsorptionswärme, die durch Kühlen bei einer Adsorption anfällt, Absorptionswärme, die durch Kühlen bei einer Absorption anfällt, Kristallisationswärme, die durch Kühlen bei einer Kristallisation anfällt, oder Kondensationswärme ist, die bei der zumindest teilweisen Kondensation, beispielsweise eines Brüden bei einer Destillation, anfällt, oder wobei die durch die auf den Wärmeträger übertragene Wärmeenergie beim Kühlen von Stoffströmen innerhalb einer Produktionsanlage anfällt.
